# FASCICULE DE BREVET EUROPEEN

(11) **EP 1 051 700 B1**
(45) Date de publication et mention de la délivrance du brevet: **19.10.2005**
(21) Numéro de dépôt: 99956146.7
(22) Date de dépôt: 25.11.1999
(51) Int. Cl.: G10K 11/34, G01S 5/14, G01S 5/30, G01N 29/26

(54) **TRANSDUCTEUR ULTRASONORE DE CONTACT, A ELEMENTS MULTIPLES**
KONTAKT-ULTRASCHALLWANDLER MIT MEHREREN ELEMENTEN
MULTIELEMENT ULTRASONIC CONTACT TRANSDUCER

(30) Priorité: 27.11.1998 FR 9814971
(43) Date de publication de la demande: 15.11.2000
(73) Titulaire: COMMISSARIAT A L'ENERGIE ATOMIQUE, 75752 Paris Cédex 15 (FR)
(72) Inventeur: BOLOMEY, Jean-Charles, F-75013 Paris (FR); CATTIAUX, Gérard, F-78117 Chateaufort (FR); CHATILLON, Sylvain, F-93330 Neuilly sur Marne (FR); JOISEL, Alain, F-92190 Meudon (FR); SERRE, Marc, F-78000 Versailles (FR)
(74) Mandataire: Ilgart, Jean-Christophe
(86) Numéro de dépôt international: PCT/FR1999/002912
(87) Numéro de publication internationale: WO 2000/033292

(56) Documents cités:
- EP-A- 0 312 481
- US-A- 4 703 443
- US-A- 5 680 863
- US-A- 5 913 825
- POWELL D J, HAYWARD G: "Flexible Ultrasonic Transducer Arrays for Nondestructive Evaluation Applications -- Part II: Performance Assessment of Different Array Configurations" IEEE TRANSACTIONS ON ULTRASONICS, FERROELECTRICS, AND FREQUENCY CONTROL, vol. 43, no. 3, mai 1996 (1996-05), pages 393-402, XP002112831 USA cité dans la demande
- J. CH. BOLOMEY: "La méthode de diffusion modulée: une approche au relevé des cartes de champs microondes en temps réel" L'ONDE LECTRIQUE, vol. 62, no. 5, mai 1982 (1982-05), pages 73-78, XP002112832 France cité dans la demande

## Description

### DOMAINE TECHNIQUE

La présente invention concerne un transducteur ultrasonore de contact, à éléments multiples.

Elle s'applique notamment à la médecine et au contrôle non destructif de pièces mécaniques, en particulier de pièces ayant une forme complexe ou un état de surface irrégulier par exemple du fait d'un meulage.

### ÉTAT DE LA TECHNIQUE ANTÉRIEURE

Dans de nombreux domaines industriels, et en particulier dans le cas des centrales nucléaires, le contrôle par un transducteur ultrasonore de contact joue un rôle important dans l'inspection des matériaux.

Cette technique consiste à déplacer ce transducteur ultrasonore directement au contact d'une pièce à inspecter. Pour chacune de ses positions, le transducteur émet des impulsions ultrasonores et enregistre les échos réfléchis par la structure et éventuellement les défauts de la pièce.

Cependant, de nombreux aspects géométriques rendent difficile l'usage des ultrasons : accessibilité limitée (en particulier pour les branchements), états de surface variables, variation des profils. Les transducteurs utilisés lors de ces contrôles sont des transducteurs classiques qui ne permettent pas une optimisation de l'examen.

En fonction des zones, on peut par exemple observer des variations de sensibilité liées à un mauvais contact entre le transducteur et la pièce contrôlée, une imprécision de localisation due à une désorientation du transducteur appuyé contre la pièce, une couverture partielle d'une soudure lorsque le transducteur est bloqué par la configuration de la surface.

Lors de contrôles réalisés sur des pièces de configuration complexe, de nombreuses difficultés sont donc observées. Elles traduisent la limite des performances des transducteurs ultrasonores de contact classiques :

### 1) Variation de l'épaisseur de la couche de couplage

Lors du passage du transducteur ultrasonore sur une zone comportant un état de surface non conforme ou présentant des variations de configuration, le contact n'est pas optimal. Ainsi, la lame de couplage située entre la surface de l'échantillon contrôlé et la surface émettrice du transducteur présente une épaisseur variable. Le retard consécutif à la traversée de cette lame est donc différent pour les ondes ultrasonores émises en différents points de la surface du transducteur.

En outre, des phénomènes complexes d'interférences entre les différentes ondes successivement réfléchies interviennent dans cette lame. Il en résulte une dégradation du faisceau ultrasonore, se traduisant par une perte de sensibilité du contrôle. La capacité du transducteur à détecter d'éventuels défauts s'en trouve ainsi limitée.

### 2) Désorientations du transducteur

Dans le cas du contrôle d'un échantillon présentant des variations de profil, le transducteur étant appuyé sur l'échantillon, son orientation varie au cours du contrôle. Ainsi, la direction de propagation de l'onde ultrasonore dans l'échantillon ne peut être maîtrisée puisqu'elle change au cours du déplacement du transducteur le long du profil.

Lors d'un contrôle effectué en mode manuel, le déplacement appliqué par l'opérateur ne peut être parfaitement rectiligne, ce qui engendre à nouveau une désorientation du faisceau ultrasonore transmis. L'information sur la localisation du défaut dans l'échantillon est alors perdue puisque la direction de propagation du faisceau dans cet échantillon est inconnue.

### 3) Accessibilité limitée

Dans certains cas, la configuration d'une pièce à contrôler interdit le déplacement du transducteur le long de cette pièce. La zone à contrôler ne peut être que partiellement couverte.

Examinons maintenant les solutions connues qui permettent de résoudre ces problèmes.

La maîtrise du faisceau ultrasonore est obtenue en focalisant le faisceau transmis dans la pièce inspectée avec une profondeur de focalisation et une orientation prédéterminées.

Le principe de focalisation consiste à appliquer des retards à la surface émettrice de manière que l'ensemble des contributions parviennent en phase au point focal désiré.

Dans le cas des transducteurs monolithiques, la distribution des retards est obtenue physiquement en appliquant une lentille déphasante mise en forme sur la surface d'émission. Un tel système est donc figé et ne peut être satisfaisant dans le cas où la surface de la pièce présente des variations de configuration.

Une mise en forme dynamique du faisceau ultrasonore requiert l'utilisation de transducteurs à éléments multiples ou transducteurs multi-éléments. Les retards sont affectés électroniquement à chaque élément du transducteur, ce qui permet de modifier les caractéristiques du faisceau ultrasonore engendré par un unique élément et donc de commander la focalisation du faisceau et, en même temps, de compenser les déformations occasionnées par des surfaces de configuration variable.

### 1) Transducteurs multi-éléments en immersion

Le contrôle d'une pièce présentant un profil variable peut être réalisé avec un transducteur multi-éléments immergé dans un liquide de couplage, par exemple de l'eau. Dans ce cas, le transducteur n'est plus placé directement au contact de la pièce mais en est séparé par une couche d'eau suffisamment épaisse pour que les phénomènes d'interférences entre les différentes ondes ultrasonores successivement réfléchies dans la lame de couplage (lame d'eau dans l'exemple considéré) soient fortement réduits.

Lors du contrôle d'une pièce de configuration complexe, la focalisation du faisceau ultrasonore est obtenue en calculant les parcours, dans l'eau et le matériau dont est faite cette pièce (par exemple l'acier), des ondes ultrasonores émises par les différents éléments du transducteur vers le point focal, et ce pour chaque position du transducteur.

Cette solution entraîne d'importantes difficultés. Le calcul de la loi de retard adaptée implique la connaissance de la configuration exacte de la pièce ainsi que la position et l'orientation du transducteur par rapport à la pièce.

En outre, ce mode de contrôle n'est pas toujours utilisable en milieu industriel. En effet l'immersion locale de la pièce peut être difficile à réaliser en particulier pour des raisons d'accessibilité limitée.

### 2) Transducteurs multi-éléments de contact

Des transducteurs multi-éléments de contact sont également utilisés. Cependant, les dégradations du champ transmis dues à un contact inadapté restent présentes lors du contrôle de pièces de configuration complexe.

Des techniques algorithmiques sont développées afin de compenser cette dégradation, mais elles demeurent peu satisfaisantes car elles nécessitent la présence de défauts connus dans la pièce.

Une solution, récemment développée, consiste en l'utilisation d'un transducteur de contact murti-éléments dont la surface émettrice est déformable, de façon à s'adapter à la surface exacte de la pièce. Dans ce cas, le contact est optimal, la lame de couplage située entre la surface émettrice et la pièce contrôlée restant suffisamment fine et homogène pour ne pas perturber la transmission de l'onde.

Citons en particulier le transducteur connu par les documents [1], [2] et [4] (qui, comme les autres documents cités par la suite, sont mentionnés à la fin de la présente description), transducteur qui est obtenu à partir de plaquettes piézoélectriques rigides (en céramique) noyées dans un substrat souple qui est passif vis-à-vis des ultrasons.

Cependant, la maîtrise du faisceau ultrasonore transmis en vue d'une optimisation de la caractérisation des défauts nécessite ici encore la connaissance exacte de la géométrie de la pièce contrôlée ainsi que de la position et de l'orientation du transducteur par rapport à cette pièce.

JP 10042395 A décrit un transducteur ultrasonore à éléments multiples.

### EXPOSÉ DE L'INVENTION

La présente invention vise à améliorer la performance du contrôle, par des ultrasons, d'un objet (pièce mécanique ou même partie du corps humain) ayant une configuration complexe, en vue de mieux détecter, localiser et caractériser les défauts que cet objet est susceptible de comporter.

L'amélioration de cette performance nécessite la maîtrise du faisceau ultrasonore transmis dans l'objet, en particulier en ce qui concerne la profondeur de focalisation et l'orientation de ce faisceau.

De façon précise, la présente invention a pour objet un transducteur ultrasonore de contact, à éléments multiples, chaque élément étant émetteur et récepteur d'ultrasons, le transducteur étant destiné à être déplacé par rapport à un objet à contrôler et ayant une surface émettrice déformable qui est destinée à être en contact avec la surface de cet objet et à partir de laquelle les ultrasons sont émis vers l'objet, des moyens de commande étant prévus pour engendrer des impulsions d'excitation des éléments émetteurs, ce transducteur comprenant des moyens de détermination des positions respectives des éléments émetteurs d'ultrasons par rapport à l'objet au cours du déplacement du transducteur,
des moyens de traitement étant prévus pour :
- établir, à partir des positions ainsi déterminées, des lois de retard permettant aux éléments émetteurs d'engendrer un faisceau ultrasonore focalisé, dont les caractéristiques sont maîtrisées par rapport à l'objet, et
- appliquer ces lois de retard aux impulsions d'excitation,
les éléments récepteurs d'ultrasons étant destinés à fournir des signaux permettant la formation d'images relatives à l'objet,
caractérisé en ce que les moyens de détermination des positions respectives des éléments émetteurs d'ultrasons par rapport à l'objet comprennent :
- des premiers moyens prévus pour déterminer les positions respectives des éléments émetteurs par rapport à une partie indéformable du transducteur, par mesure de la déformation de la surface émettrice, et pour fournir des signaux représentatifs des positions ainsi déterminées,
- des deuxièmes moyens prévus pour déterminer la position et l'orientation de cette partie indéformable du transducteur par rapport à l'objet et pour fournir des signaux représentatifs de la position et de l'orientation ainsi déterminées, et
- des troisièmes moyens prévus pour fournir les positions respectives des éléments émetteurs d'ultrasons par rapport à l'objet à partir des signaux fournis par ces premiers et deuxièmes moyens.

Grâce à l'invention, la connaissance de la configuration exacte de l'objet n'est plus nécessaire puisqu'elle est mesurée par le transducteur. Ce dernier est alors capable de fonctionner de manière autonome puisqu'il s'adapte à la configuration réelle du contrôle réalisé, par mesure, analyse, et compensation de la déformation de la surface émettrice de ce transducteur.

On peut ainsi considérer que ce transducteur est « intelligent ».

Selon un premier mode de réalisation particulier du transducteur objet de l'invention, les éléments multiples sont formés d'une lame de polymère piézoélectrique souple et d'un réseau d'électrodes juxtaposées obtenues par dépôt métallique.

Selon un deuxième mode de réalisation particulier, les éléments multiples sont des éléments piézoélectriques rigides, noyés dans un substrat souple qui est passif vis-à-vis des ultrasons.

Selon un troisième mode de réalisation particulier, les éléments multiples sont rigides et assemblés mécaniquement les uns aux autres de manière à former une structure articulée.

De préférence, les premiers moyens comprennent :
- des moyens de mesure de la distance, par rapport à des points distincts et fixes de la partie indéformable du transducteur, de la face-arrière de chaque élément d'un sous-ensemble des éléments émetteurs d'ultrasons, et
- des moyens de traitement auxiliaire prévus pour déterminer la position de chaque élément émetteur d'ultrasons, à partir des distances ainsi déterminées.

Selon un premier mode de réalisation particulier de l'invention, les moyens de mesure de la distance comprennent :
- des émetteurs auxiliaires d'ultrasons respectivement fixés aux faces-arrières des éléments du sous-ensemble et prévus pour émettre des ultrasons les uns après les autres,
- des récepteurs auxiliaires d'ultrasons fixés à la partie indéformable et prévus pour détecter les ultrasons émis par les émetteurs auxiliaires, et
- des moyens de mesure de la distance de chaque émetteur auxiliaire par rapport à chaque récepteur d'un groupe de récepteurs auxiliaires recevant les ultrasons de plus grande intensité.

Selon un deuxième mode de réalisation particulier de l'invention, les moyens de mesure de la distance comprennent :
- une source de micro-ondes,
- une pluralité d'antennes micro-ondes rigidement solidaires de la partie indéformable, couplées à cette source et prévues pour émettre, les unes après les autres, des micro-ondes et pour recevoir, également les unes après les autres, des micro-ondes,
- des sondes de micro-ondes respectivement fixées aux faces-arrières des éléments du sous-ensemble et prévues pour diffuser les micro-ondes émises par les antennes, ces sondes étant respectivement munies de dispositifs non-linéaires prévus pour moduler, à des fréquences différentes, les micro-ondes respectivement diffusées par les sondes, et
- des moyens de réception des micro-ondes couplés aux antennes et prévus pour mesurer la distance de chaque sonde à chaque antenne par mesure de la phase des micro-ondes diffusées par cette sonde et reçues par cette antenne, ces moyens de réception étant en outre prévus pour distinguer les sondes les unes des autres par détection synchrone aux différentes fréquences de modulation.

De préférence, les moyens de traitement auxiliaires sont prévus pour déterminer, par une méthode d'interpolation, un profil passant au mieux par les faces-arrières des éléments du sous-ensemble et pour déterminer, à partir de ce profil, la position de la face émettrice de chaque élément émetteur d'ultrasons par rapport à la partie indéformable du transducteur.

Les deuxièmes moyens peuvent comprendre un bras mécanique articulé, solidaire de la partie indéformable du transducteur.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique de la surface émettrice d'une barrette linéaire d'éléments émetteurs-récepteurs d'ultrasons,
- la figure 2 illustre schématiquement un exemple de déformation de la barrette de la figure 1 sur un profil quelconque,
- la figure 3 illustre schématiquement un principe de triangulation utilisable dans l'invention,
- la figure 4 est une vue schématique d'un premier mode de réalisation particulier du transducteur objet de l'invention, qui utilise des capteurs ultrasonores auxiliaires,
- la figure 5 illustre schématiquement le principe d'une méthode de diffusion (« scattering method »), utilisable dans l'invention,
- la figure 6 est une vue schématique d'un deuxième mode de réalisation particulier du transducteur objet de l'invention, qui utilise des antennes à micro-ondes, et
- les figures 7 à 9 illustrent schématiquement trois étapes d'un algorithme utilisable dans l'invention.

### EXPOSÉ DÉTAILLÉ DE MODES DE RÉALISATION PARTICULIERS

On considère un transducteur ultrasonore conforme à l'invention. Il s'agit d'un transducteur à éléments multiples, dont la surface émettrice est déformable.

Cette surface émettrice est destinée à être déplacée sur la surface d'un objet à contrôler tout en étant maintenue en contact avec cette surface de l'objet.

De plus, conformément à l'invention, ce transducteur comprend une instrumentation de mesure de la déformation de sa surface émettrice donnant ainsi la position des éléments piézo-électriques par rapport à la partie rigide du transducteur, et on mesure la position (3 coordonnées) et l'orientation (3 composantes) de la partie rigide du transducteur par rapport à l'objet.

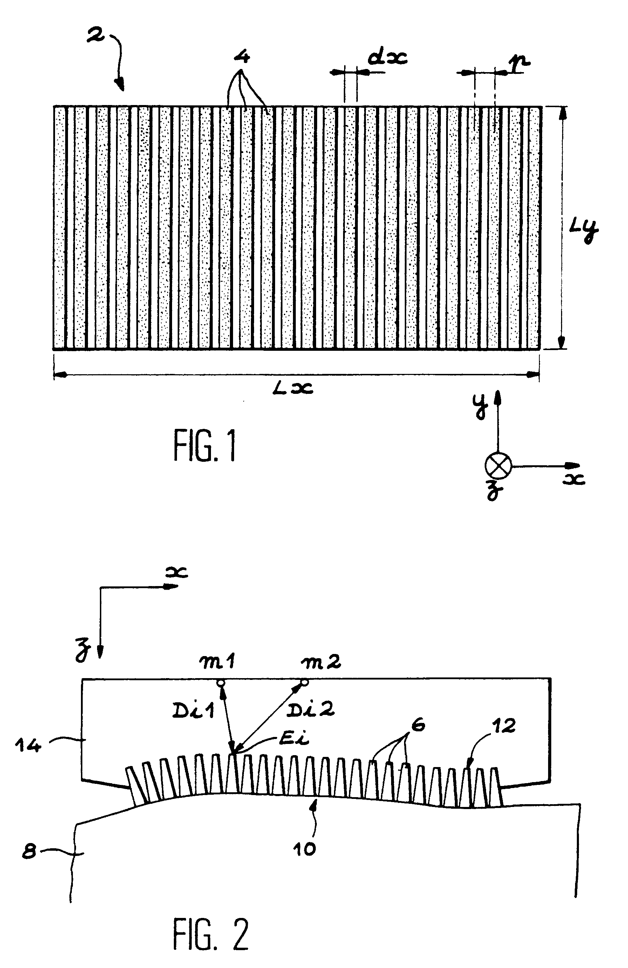

Par souci de clarté, on considère dans ce qui suit un transducteur ultrasonore du type barrette linéaire 2 (figure 1) n'encaissant des déformations que dans le plan d'incidence des ultrasons, plan (x,z) des figures 1 et 2.

La découpe de la surface émettrice de ce transducteur en éléments indépendants 4 n'est réalisée que selon une direction, Ly de la figure 1.

Les paramètres géométriques d'une telle barrette 2 sont représentés sur la figure 1 où les notations sont les suivantes :
Lx : longueur dans le plan d'incidence (x, z)
Ly : largeur dans le plan perpendiculaire (y, z) au plan d'incidence
p : distance entre les centres respectifs de deux éléments adjacents
dx : largeur d'un élément.

Les valeurs de ces paramètres sont déterminées en fonction de l'application et des caractéristiques acoustiques choisies, à savoir la fréquence centrale et la largeur de bande du signal.

Ce transducteur linéaire (c'est-à-dire à une dimension) permet de compenser les déformations de la surface dans le plan d'incidence (x,z) de la figure 2.

Ce concept peut être appliqué à la réalisation de transducteurs ultrasonores du type matriciel dont la découpe de la surface émettrice, effectuée selon les deux directions x et y, permet la maîtrise du faisceau ultrasonore dans toutes les directions de l'espace à trois dimensions.

En ce qui concerne la nature déformable du transducteur, plusieurs techniques peuvent être envisagées. Elles sont définies par la nature du matériau piézoélectrique utilisé.

Ainsi, la surface émettrice peut être constituée d'une lame de polymère piézoélectrique souple, typiquement du PVDF, et d'un réseau d'électrodes juxtaposées obtenues par dépôt métallique (voir articles [1] et [2]).

De même, une technique décrite dans les documents [1], [2] et [4] consiste en l'utilisation d'un ensemble d'éléments piézoélectriques rigides coulés dans un substrat souple passif (c'est-à-dire inerte) vis-à-vis des ultrasons.

Enfin, une technique, développée par la Société Metalscan, consiste en l'utilisation d'un ensemble d'éléments ultrasonores rigides qui sont assemblés mécaniquement de façon à obtenir une structure articulée.

Quelle que soit la technique, (existante ou spécifiquement développée), celle-ci doit permettre d'obtenir des déformations locales ayant un très faible rayon de courbure, typiquement 15 mm à 20 mm, et être transposable au cas de transducteurs ultrasonores du type matriciel.

Sur la figure 2, on a représenté un exemple de réalisation d'une telle barrette multi-éléments linéaire et déformable, à savoir celle qui est proposée par la Société Metalscan.

La forme trapézoïdale et les dimensions des éléments émetteurs-récepteurs d'ultrasons 6 sont étudiées pour permettre un débattement suffisant pour obtenir la déformation souhaitée.

Sur la figure 2, l'objet contrôlé a la référence 8. Chaque élément a une face active 10 en contact avec la surface de l'objet et une face-arrière 12 appelée « backing ».

Le transducteur de la figure 2 comprend aussi un boîtier indéformable 14 dont la barrette à éléments multiples 6 est rendue solidaire.

Selon l'invention, on intègre au sein du transducteur un système de mesure de la déformation de la face-avant de ce transducteur (cette face-avant contenant toutes les faces actives des éléments). Cette déformation est obtenue à partir d'une instrumentation spécifique que l'on va décrire.

Dans le cas d'une barrette à une dimension, la position d'un élément est déterminée par ses deux coordonnées (x,z), mesurées dans le repère propre au transducteur.

La technique choisie pour obtenir les coordonnées (position) de chaque élément dans le repère du transducteur consiste en l'échantillonnage de la surface déformable par mesure des coordonnées d'un certain nombre d'éléments.

Une technique d'interpolation polynomiale est ensuite appliquée afin de déterminer les coordonnées de l'ensemble des éléments.

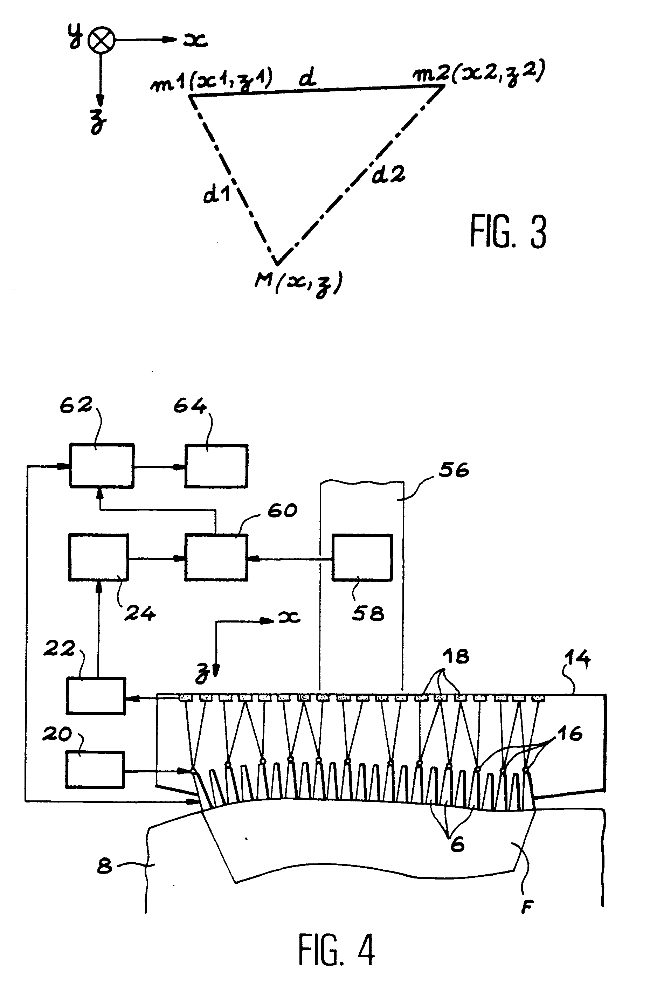

La mesure permettant d'obtenir cet échantillonnage est fondée sur le principe de la triangulation (figure 3).

Dans le cas présent, les coordonnées (x, z) d'un point de la face arrière d'un élément M peuvent être obtenues à partir de la mesure de deux distances d1, d2 le séparant de deux points distincts m1, m2 de coordonnées connues (x1, z1), (x2, z2), ces points m1 et m2 étant séparés l'un de l'autre par une distance d.

L'instrumentation est donc composée d'un ensemble de capteurs permettant de mesurer, pour chaque élément Ei (figure 2) choisi pour l'échantillonnage, les distances Di1, Di2 le séparant respectivement de deux points parfaitement connus m1, m2 sur le boîtier 14 du transducteur.

Les capteurs de distance utilisés doivent répondre à de nombreuses exigences.

En premier lieu, la mesure des distances sert à la définition des lois de retard à appliquer à la barrette de sorte que la résolution doit être suffisamment fine. On choisit une résolution de l'ordre de λ/10, où λ est la longueur d'onde des ultrasons dans le matériau inspecté.

Par exemple, la fréquence des ultrasons étant de 2 MHz, et le matériau de l'acier, on obtient une longueur d'onde longitudinale de 2,95 mm. La résolution requise est donc de l'ordre de 0,3 mm.

En outre, l'instrumentation complète doit être intégrée au sein du transducteur de sorte que la dimension élémentaire des capteurs doit être très petite, de l'ordre de 1 mm.

Enfin, la plage de distance accessible à ces capteurs doit être de plusieurs millimètres.

Deux techniques de capteurs répondant à ces critères ont été sélectionnées.

La première technique consiste en l'utilisation d'émetteurs et de récepteurs ultrasonores (figure 4).

Un émetteur auxiliaire d'ultrasons 16 est fixé sur la face-arrière de chaque élément sélectionné pour l'échantillonnage parmi les éléments 6 et un ensemble de récepteurs auxiliaires d'ultrasons 18, dont on connaît les positions, sont fixés sur la face interne du boîtier 14 du transducteur, en regard de ces émetteurs 16.

A chaque émetteur 16 est associé dynamiquement un couple de récepteurs 18 en fonction de l'amplitude du signal reçu.

La distance d'un émetteur 16 à chaque récepteur associé 18 est estimée par mesure du temps de vol de l'onde ultrasonore issue de cet émetteur 16.

L'utilisation de différents récepteurs 18, c'est-à-dire de différents points de référence sur le boîtier, est imposée par la directivité des ondes ultrasonores.

Les caractéristiques acoustiques des émetteurs 16 et des récepteurs 18 (en particulier fréquence centrale, largeur de bande) sont choisies de façon à obtenir la résolution souhaitée.

Avec cette technique, pour des raisons évidentes de perturbation, les émetteurs 16 doivent émettre les uns après les autres. Les positions des différents éléments respectivement associés à ces émetteurs 16 ne peuvent donc être obtenues simultanément mais séquentiellement.

C'est pour cette raison qu'il a été question plus haut d'une association dynamique : on entend par là que, lorsqu'un émetteur 16 est activé, les ultrasons qu'il a émis sont captés par tous les récepteurs 18 et que l'on sélectionne, parmi tous ces récepteurs 18, les deux récepteurs ayant reçu les ultrasons de plus grande intensité pour associer ces deux récepteurs à l'émetteur considéré 16.

On voit aussi sur la figure 4 :
- les moyens 20 de commande des émetteurs auxiliaires 16, permettant d'activer ceux-ci les uns après les autres,
- les moyens 22 qui reçoivent les signaux fournis par les récepteurs 18, sélectionnent deux de ces récepteurs pour les associer dynamiquement à chaque émetteur 16, comme on l'a vu, et déterminent la distance de la face-arrière de l'élément 6 portant cet émetteur par rapport à chacun de ces deux récepteurs associés (d'où la position de la face-arrière de cet élément 6 par rapport au boîtier 14), et
- les moyens de traitement auxiliaires 24 qui déterminent, comme on le verra plus loin, la position de la face active de chacun des éléments 6 par rapport au boîtier.

La seconde technique repose sur le principe de la phase modulée, appliquée aux antennes micro-ondes.

Cette technique, expliquée dans le document [3] auquel on se reportera, est fondée sur le principe de la diffusion (« scattering »).

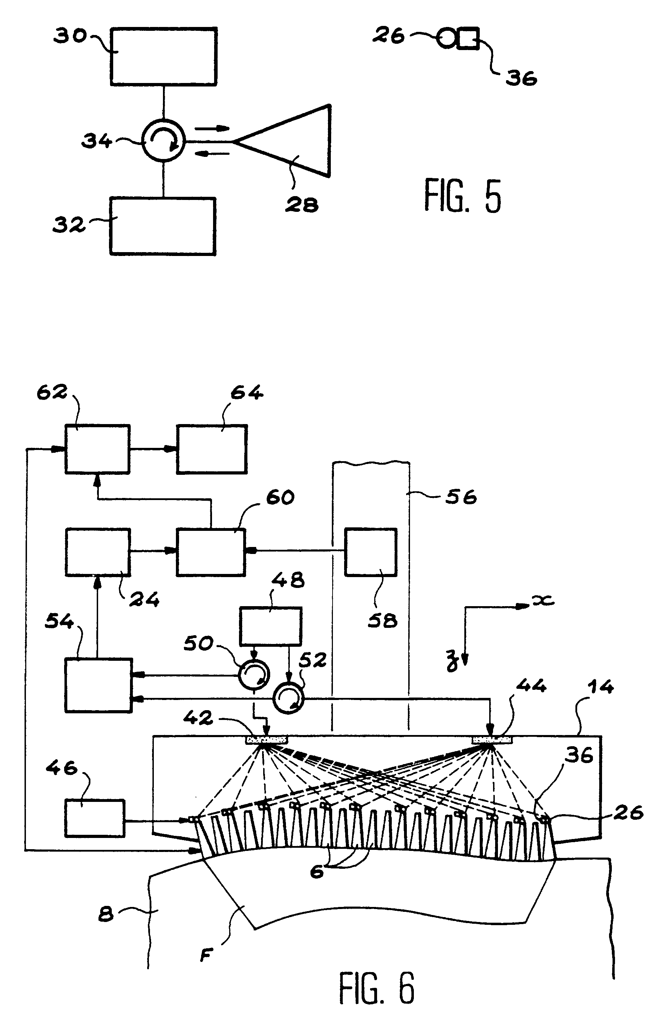

Elle consiste à mesurer la perturbation du champ électromagnétique induit par la présence d'une sonde 26 (figure 5) dans le champ d'une antenne à micro-ondes 28. Le signal diffusé par la sonde est donc capté au niveau de l'antenne, cette antenne étant reliée à une source de micro-ondes 30 et à un récepteur de micro-ondes 32 par l'intermédiaire d'un circulateur 34.

Initialement destinée à la mesure du champ rayonné par une antenne micro-onde, cette technique permet, par réciprocité, de mesurer la distance séparant la sonde de l'antenne. En effet, si le diagramme de rayonnement de l'antenne est parfaitement connu, la mesure de la phase du champ rayonné à l'emplacement de la sonde permet de connaître la distance séparant cette sonde de l'antenne.

Afin d'améliorer sa détection au niveau de l'antenne, le signal diffusé par la sonde est modulé à l'aide d'un dispositif non-linéaire 36, typiquement une diode.

Cette technique de modulation permet en outre l'utilisation simultanée de différentes sondes modulées à des fréquences différentes, la distinction se faisant au niveau du récepteur, par une simple détection synchrone aux différentes fréquences de modulation. Il est ainsi possible de mesurer simultanément la distance séparant un ensemble de sondes d'une même antenne.

L'utilisation de cette technique est schématiquement illustrée sur la figure 6 et consiste donc à placer, sur la face-arrière de chacun des éléments 6 choisis pour l'échantillonnage, une sonde 26 modulée par un dispositif non-linéaire 36, et à fixer sur la face interne du boîtier 14, en regard des sondes modulées 26, deux antennes micro-ondes 42 et 44 dont les positions sur ce boîtier sont connues.

Ces antennes ne pouvant être utilisées simultanément, deux séquences d'acquisition sont nécessaires pour obtenir la distance séparant chaque sonde d'un élément d'une même antenne.

Notons enfin que la nature de la distance mesurée dépend de la configuration du diagramme de rayonnement de cette antenne (ce diagramme étant typiquement plan ou sphérique), ce qui autorise ainsi différentes configuration d'instrumentation.

Sur la figure 6, on voit aussi :
- les moyens 46 de commande des dispositifs non-linéaires 36 qui modulent les sondes à des fréquences différentes,
- la source de micro-ondes 48 qui active successivement les antennes 42 et 44 pour que celles-ci émettent successivement des micro-ondes et qui sont respectivement reliées à ces antennes 42 et 44 par l'intermédiaire de deux circulateurs 50 et 52,
- le récepteur de micro-ondes 54 qui traite les signaux qu'il reçoit successivement des antennes par l'intermédiaire des circulateurs 50 et 52, pour déterminer la distance de la face-arrière de chaque élément 6 portant une sonde 26 par rapport à chaque antenne (d'où la position de la face-arrière de cet élément 6 par rapport au boîtier 14), cette détermination des distances se faisant par mesure de la phase des micro-ondes diffusées par les sondes et le récepteur étant prévu pour distinguer les sondes les unes des autres par détection synchrone aux différentes fréquences de modulation, et
- les moyens de traitement auxiliaires 24 qui déterminent, comme on va le voir, la position de chacun des éléments par rapport au boîtier 14.

A partir de l'échantillonnage de la surface émettrice de la barrette à éléments multiples 6 (figure 4 ou 6), il faut donc obtenir les coordonnées de l'ensemble de ces éléments 6.

Or, la mesure se fait sur la face-arrière ou « backing » d'un élément, alors que le calcul de la loi de retard se fait à partir de la position de la face active ou face émettrice de l'élément c'est-à-dire du côté de la surface émettrice du transducteur.

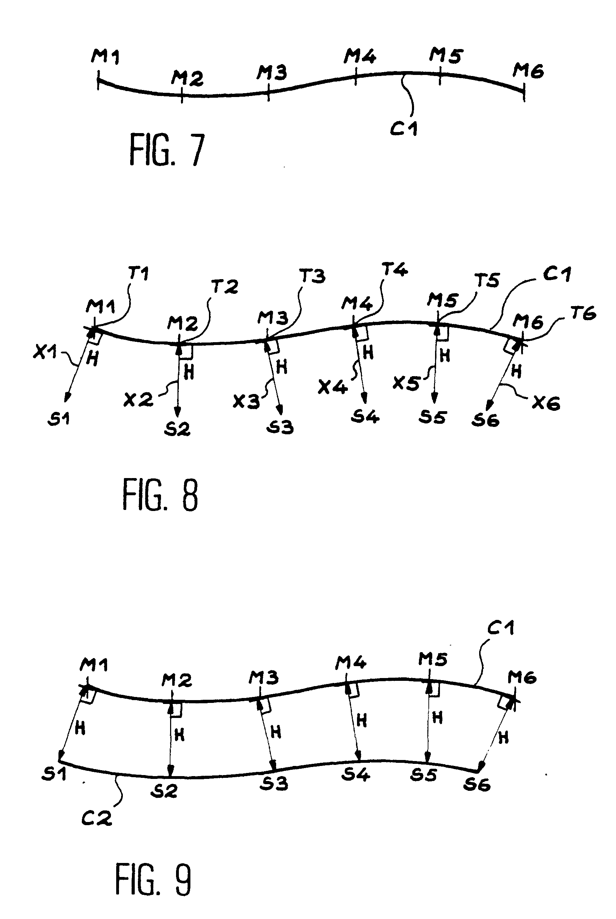

Un algorithme a donc été développé afin d'obtenir cette dernière information. Il comporte trois étapes.
1) A l'aide d'une interpolation par exemple du type pistolet (en anglais « spline ») cubique, nous déterminons la courbe C1 approchant au mieux le profil passant par les points de mesure sur le backing (voir la figure 7 où, à titre d'exemple, six points de mesure M1 à M6 sont représentés).
2) Nous émettons ici l'hypothèse que l'axe de chaque élément (les axes ont les références X1 à X6 sur la figure 8) reste orthogonal à la pente locale à la surface de la pièce contrôlée et à la pente locale à la surface constituée par l'extrémité du backing de l'ensemble des éléments (les pentes locales ont les références T1 à T6).
   A partir du profil de backing, nous déterminons donc, par mesure de la dérivée locale, l'orientation de chaque élément mesuré.
   A partir de cette orientation et de la hauteur H de chaque élément, nous obtenons ainsi les coordonnées du point correspondant sur la surface émettrice (ces points correspondants ont les références S1 à S6 sur la figure 8).
3) Nous appliquons enfin une interpolation du type « spline » cubique sur ces points d'échantillonnage de la surface émettrice.

A partir de la courbe C2 ainsi obtenue (figure 9), nous pouvons déterminer la position des différents éléments dans le repère du transducteur c'est-à-dire par rapport au boîtier 14 de ce transducteur dans l'exemple considéré.

Voyons maintenant l'instrumentation de mesure de la position et de l'orientation du transducteur de la figure 4 ou 6.

Cette instrumentation associée au transducteur doit permettre d'obtenir, au cours du déplacement de ce dernier, sa position et son orientation dans le repère fixe de l'objet 8.

Il existe différents capteurs destinés à ce type de mesure.

Dans les exemples des figures 4 et 6, on utilise un bras mécanique articulé 56. Selon la nature passive ou active de ce bras, on mesure ou on contrôle sa position et son orientation au cours de son déplacement au contact de l'objet.

Dans les exemples des figures 4 et 6, ce bras est muni de divers capteurs 58 permettant de situer le transducteur ultrasonore dans l'espace et de mesurer son orientation au cours de son déplacement par rapport à l'objet 8.

Un exemple d'un tel bras est la partie mécanique du « bras sinus » commercialisé par la Société Metalscan (voir le document [5]).

Sur les figures 4 et 6, on voit aussi des moyens 60 qui, en fonction des positions fournies par les moyens 24 et en fonction de la position et de l'orientation fournies par les capteurs 58, déterminent les positions du transducteur par rapport à l'objet 8.

On voit aussi les moyens de commande et de traitement 62 prévus pour
- engendrer des impulsions d'excitation des éléments 6,
- établir, à partir des positions ainsi déterminées, des lois de retard permettant aux éléments 6 d'engendrer un faisceau ultrasonore focalisé F, dont les caractéristiques sont maîtrisées par rapport à l'objet 8, et
- appliquer ces lois de retard aux impulsions d'excitations.

Les éléments 6 fournissent alors des signaux aux moyens 62 également prévus pour former, à partir de ces signaux, des images relatives à l'objet 8. Ces images sont affichées sur un écran 64.

Dans le cas où l'on utilise un bras passif (sans capteur) l'utilisateur déplace manuellement le transducteur, sa position et son orientation étant mesurées par les capteurs 58, et fournies aux moyens 60.

Le bras peut être remplacé par d'autre moyens tels que des capteurs inertiels par exemple, également aptes à fournir la position et l'orientation du transducteur.

De plus, les exemples donnés utilisent des éléments à la fois émetteurs et récepteurs d'ultrasons. L'homme du métier peut adapter ces exemples au cas de transducteurs comprenant des éléments seulement prévus pour émettre des ultrasons et d'autres éléments seulement prévus pour recevoir des ultrasons.

Ces exemples sont aussi adaptables à un transducteur émettant des ondes de Lamb.

De plus, dans ces exemples, on utilise des transducteurs comprenant une barrette linéaire d'éléments ultrasonores mais l'invention n'est pas limitée à de tels transducteurs. L'homme du métier peut adapter les exemples donnés à des transducteurs matriciels par exemple du genre de ceux dont il est question dans les documents [1], [2] et [4].

En particulier, il faut alors associer dynamiquement à chaque émetteur auxiliaire d'ultrasons (voir figure 4) non plus deux mais trois récepteurs d'une matrice de récepteurs d'ultrasons fixés au boîtier 14 ou utiliser non plus deux mais trois antennes à micro-ondes dans le cas d'un transducteur matriciel adapté de celui de la figure 6.

Les documents cités dans la présente description sont les suivants :
[1] D.J. Powell, et G. Hayward, « Flexible ultrasonic transducer arrays for nondestructive evaluation applications PART I : The theoretical modeling approach », IEEE transactions on ultrasonics, ferroelectrics, and frequency control, vol.43, n°3, mai 1996, pages 385 à 392
[2] D.J. Powell et G. Hayward, « Flexible ultrasonic transducer arrays for nondestructive evaluation applications PART II : Performance assessment of different array configuration », IEEE transactions on ultrasonics, ferroelectrics, and frequency control, vol.43, n°3, may 1996, pages 393-402
[3] J. CH. Bolomey, « La méthode de diffusion modulée : une approche au relevé des cartes de champs micro-ondes en temps réel », L'onde électrique, 1982, vol.62, n°5, pages 73-78
[4] Demande internationale WO 94/13411, date de publication internationale : 23 juin 1994, pour « Ultrasonic transducer », invention de G. Hayward et D.J. Powel
[5] Publication de la Société METALSCAN, Grenoble, France, Référence SINU9506MTS, juin 1995, « Système numérique de contrôle par ultrasons SINUS O.L. O°MTS, pages 1-10.

## Revendications

1. Transducteur ultrasonore de contact, à éléments multiples (6), chaque élément étant émetteur et récepteur d'ultrasons, le transducteur étant destiné à être déplacé par rapport à un objet à contrôler (8) et ayant une surface émettrice déformable qui est destinée à être en contact avec la surface de cet objet et à partir de laquelle les ultrasons sont émis vers l'objet, des moyens (62) de commande étant prévus pour engendrer des impulsions d'excitation des éléments émetteurs,ce transducteur comprenant des moyens (16, 18, 20, 22, 24, 56, 58, 60; 24, 38, 40, 42, 44, 46, 48, 50, 52, 54, 56, 58, 60) de détermination des positions respectives des éléments émetteurs d'ultrasons par rapport à l'objet au cours du déplacement du transducteur,
des moyens de traitement étant prévus pour
- établir, à partir des positions ainsi déterminées, des lois de retard permettant aux éléments émetteurs d'engendrer un faisceau ultrasonore focalisé (F), dont les caractéristiques sont maîtrisées par rapport à l'objet, et
- appliquer ces lois de retard aux impulsions d'excitation,
les éléments récepteurs d'ultrasons étant destinés à fournir des signaux permettant la formation d'images relatives à l'objet,
**caractérisé en ce que** les moyens de détermination des positions respectives des éléments émetteurs d'ultrasons par rapport à l'objet comprennent :
- des premiers moyens (16, 18, 20, 22, 24; 24, 38, 40, 42, 44, 46, 48, 50, 52, 54) prévus pour déterminer les positions respectives des éléments émetteurs par rapport à une partie indéformable (14) du transducteur, par mesure de la déformation de la surface émettrice, et pour fournir des signaux représentatifs des positions ainsi déterminées,
- des deuxièmes moyens (58, 60) prévus pour déterminer la position et l'orientation de cette partie indéformable du transducteur par rapport à l'objet et pour fournir des signaux représentatifs de la position et de l'orientation ainsi déterminées, et
- des troisièmes moyens (60) prévus pour fournir les positions respectives des éléments émetteurs d'ultrasons par rapport à l'objet à partir des signaux fournis par ces premiers et deuxièmes moyens.

2. Transducteur selon la revendication 1, dans lequel les éléments multiples sont constitués d'une lame de polymère piézoélectrique souple et d'un réseau d'électrodes juxtaposées obtenues par dépôt métallique.

3. Transducteur selon la revendication 1, dans lequel les éléments multiples sont des éléments piézoélectriques rigides, noyés dans un substrat souple qui est passif vis-à-vis des ultrasons.

4. Transducteur selon la revendication 1, dans lequel les éléments multiples sont rigides et assemblés mécaniquement les uns aux autres de manière à former une structure articulée.

5. Transducteur selon la revendication 1, dans lequel les premiers moyens comprennent :
- des moyens (16, 18, 20, 22; 38, 40, 42, 44, 46, 48, 50, 52, 54) de mesure de la distance, par rapport à des points distincts et fixes de la partie indéformable du transducteur, de la face-arrière de chaque élément d'un sous-ensemble des éléments émetteurs d'ultrasons, et
- des moyens (24) de traitement auxiliaire prévus pour déterminer la position de chaque élément émetteur d'ultrasons à partir des distances ainsi déterminées.

6. Transducteur selon la revendication 5, dans lequel les moyens de mesure de la distance comprennent :
- des émetteurs auxiliaires d'ultrasons (16) respectivement fixés aux faces-arrières des éléments du sous-ensemble et prévus pour émettre des ultrasons les uns après les autres,
- des récepteurs auxiliaires d'ultrasons (18) fixés à la partie indéformable et prévus pour détecter les ultrasons émis par les émetteurs auxiliaires, et
- des moyens (22) de mesure de la distance de chaque émetteur auxiliaire par rapport à chaque récepteur d'un groupe de récepteurs auxiliaires recevant les ultrasons de plus grande intensité.

7. Transducteur selon la revendication 5, dans lequel les moyens de mesure de la distance comprennent :
- une source de micro-ondes (48),
- une pluralité d'antennes micro-ondes (42, 44) rigidement solidaires de la partie indéformable, couplées à cette source et prévues pour émettre, les unes après les autres, des micro-ondes et pour recevoir, également les unes après les autres, des micro-ondes,
- des sondes (38) de micro-ondes respectivement fixées aux faces-arrières des éléments du sous-ensemble et prévues pour diffuser les micro-ondes émises par les antennes, ces sondes étant respectivement munies de dispositifs non-linéaires (40) prévus pour moduler, à des fréquences différentes, les micro-ondes respectivement diffusées par les sondes, et
- des moyens (54) de réception des micro-ondes couplés aux antennes et prévus pour mesurer la distance de chaque sonde à chaque antenne, par mesure de la phase des micro-ondes diffusées par cette sonde et reçues par cette antenne, ces moyens de réception étant en outre prévus pour distinguer les sondes les unes des autres par détection synchrone aux différentes fréquences de modulation.

8. Transducteur selon l'une quelconque des revendications 5 à 7, dans lequel les moyens (24) de traitement auxiliaires sont prévus pour déterminer, par une méthode d'interpolation, un profil passant au mieux par les faces-arrières des éléments du sous-ensemble et pour déterminer, à partir de ce profil, la position de la face émettrice de chaque élément émetteur d'ultrasons par rapport à la partie indéformable du transducteur.

9. Transducteur selon l'une quelconque des revendications 1 à 8, dans lequel les deuxièmes moyens comprennent un bras mécanique articulé (56) solidaire de la partie indéformable (14) du transducteur.

## Patentansprüche

1. Kontakt-Ultraschallwandler mit vielen Elementen (6), wobei jedes Element ein Ultraschallsender und -empfänger ist und der Wandler dazu bestimmt ist, in Bezug auf ein zu untersuchendes Objekt (8) verschoben zu werden, wobei er eine verformbare Sendefläche aufweist, die zur Herstellung des Kontakts mit der Oberfläche des Objekts dient und von der aus die Ultraschallwellen in Richtung Objekt gesendet werden, wobei Steuereinrichtungen (62) vorgesehen sind, um Erregungsimpulse der Sendeelemente zu erzeugen, und dieser Wandler dabei Einrichtungen (16, 18, 20, 22, 24, 56, 58, 60; 24, 38, 40, 42, 44, 46, 48, 50, 52, 56, 58, 60) zur Bestimmung der jeweiligen Positionen der Ultraschall-Sendeelemente während der Verschiebung des Wandlers in Bezug auf das Objekt umfasst,
sowie Verarbeitungseinrichtungen, die dazu dienen:
- aufgrund der so bestimmten Positionen, Verzögerungsgesetze zu festzulegen, die den Sendeelementen ermöglichen, ein fokussiertes Ultraschallbündel (F) zu erzeugen, dessen Charakteristika in Bezug auf das Objekt beherrscht werden, und
- diese Verztigerungsgesetze auf die Erregungsimpulse anzuwenden,
wobei die Ultraschall-Empfangselemente dazu bestimmt sind, Signale zu liefern, welche die Bildung bzw. Realisierung das Objekt betreffender Bilder ermöglicht,
**dadurch gekennzeichnet, dass** die Einrichtungen zur Bestimmung der jeweiligen Positionen der Ultraschall-Sendeelemente in Bezug auf das Objekt umfassen:
- erste Einrichtungen (16, 18, 20, 22, 24; 24, 38, 40, 42, 44, 46, 48, 50, 52, 54) zur Bestimmung der jeweiligen Positionen der Sendeelemente in Bezug auf einen unverformbaren Teil (14) des Wandlers durch Messung der Verformung der Sendefläche, und zur Lieferung der repräsentativen Signale der so bestimmten Positionen,
- zweite Einrichtungen (58, 60) zur Bestimmung der Position und Ausrichtung dieses unverformbaren Teils des Wandlers in Bezug auf das Objekt und zur Lieferung der repräsentativen Signale der so bestimmten Position und Ausrichtung, und
- dritte Einrichtungen (60) zur Lieferung der jeweiligen Positionen der Ultraschall-Sendeelemente in Bezug auf das Objekt aufgrund der durch diese ersten und zweiten Einrichtungen gelieferten Signale.

2. Wandler nach Anspruch 1, bei dem die vielen Elemente durch einen biegsamen piezoelektrischen Polymerstreifen und ein durch Metallabscheidung realisiertes Gitter aus nebeneinanderliegenden Elektroden gebildet wird.

3. Wandler nach Anspruch 1, bei dem die vielen Elemente steife piezoelektrische Elemente sind, eingebettet in ein biegsames Substrat, das gegenüber Ultraschallwellen passiv ist.

4. Wandler nach Anspruch 1, bei dem die vielen Elemente steif sind und mechanisch so miteinander verbunden sind, dass sie eine gelenkige Struktur bilden.

5. Wandler nach Anspruch 1, bei dem die ersten Einrichtungen umfassen:
- Einrichtungen (16, 18, 20, 22; 38, 40, 42, 44, 46, 48, 50, 52, 54) zum Messen des Abstands von der Rückseite jedes Elements einer Teilgruppe der Ultraschall-Sendeelemente in Bezug auf unterschiedliche und fixe Punkte des unverformbaren Teils des Wandlers, und
- zusätzliche Verarbeitungseinrichtungen (24) zur Bestimmung der Position jedes Ultraschall-Sendeelements aufgrund der so bestimmten Abstände.

6. Wandler nach Anspruch 5, bei dem die Abstandsmesseinrichtungen umfassen:
- Ultraschall-Zusatzsender (16), jeweils befestigt an den Rückseiten der Elemente der Teilgruppe und dazu bestimmt, nacheinander Ultraschallwellen auszusenden,
- Ultraschall-Zusatzempfänger (18), befestigt an dem unverformbaren Teil und dazu bestimmt, die durch die Zusatzsender ausgesendeten Ultraschallwellen zu detektieren, und
- Einrichtungen (22) zum Messen des Abstands jedes Zusatzsenders in Bezug auf jeden Empfänger einer die Ultraschallwellen mit der größten Intensität empfangenden Gruppe von Zusatzempfängem.

7. Wandler nach Anspruch 5, bei dem die Abstandsmesseinrichtungen umfassen:
- eine Mikrowellenquelle (48),
- eine Velzahl starr mit dem unverformbaren Teil verbundener Mikrowellenantennen (42, 44), gekoppelt mit dieser Quelle und dazu vorgesehen, nacheinander Mikrowellen auszusenden und ebenfalls nacheinander Mikrowellen zu empfangen,
- Mikrowellensonden (38), jeweils befestigt an den Rückseiten der Elemente der Teilgruppe und dazu vorgesehen, die durch die Antennen abgestrahlten Mikrowellen zu streuen, wobei diese Sonden jeweils mit nichtlinearen Vorrichtungen (40) versehen sind, die dazu dienen, die jeweils durch die Sonden gestreuten Mikrowellen mit unterschiedlichen Frequenzen zu modulieren, und
- Empfangseinrichtungen (54) der Mikrowellen, gekoppelt mit den Antennen und dazu bestimmt, den Abstand von jeder Sonde zu jeder Antenne zu messen, durch Messung der Phase der durch diese Sonde gestreuten und durch diese Antenne empfangenen Mikrowellen, wobei diese Empfangseinrichtungen außerdem dazu dienen, die Sonden voneinander zu unterscheiden durch Synchrondetektion mit den verschiedenen Modulationsfrequenzen.

8. Wandler nach einem der Ansprüche 5 bis 7, bei dem die zusätzlichen Verarbeitungseinrichtungen (24) dazu bestimmt sind, durch eine Interpolationsmethode ein sehr gut an den Rückseiten der Elemente der Teilgruppe verlaufendes Profil zu bestimmen und aufgrund dieses Profils die Position der Sendefläche jedes Ultraschall-Sendeelements in Bezug auf den unverformbaren Teil des Wandlers zu bestimmen.

9. Wandler nach einem der Ansprüche 1 bis 8, bei dem die zweiten Einrichtungen einen gelenkigen mechanischen Arm (56) umfassen.

## Claims

1. Ultrasonic contact transducer with multiple elements (6), each element being an ultrasound emitting and receiving element, the transducer being designed to be moved with respect to an object to be inspected (8) and with a deformable emitting surface designed to come into contact with the surface of this object, and from which ultrasounds are emitted to the object, control means (62) being provided to generate excitation pulses for emitting elements, said transducer comprising means (16, 18, 20, 22, 24, 56, 58, 60; 24, 38, 40, 42, 44, 46, 48, 50, 52, 54, 56, 58, 60) of determining the positions of each of the ultrasound emitting elements with respect to the object as the transducer is being moved,
processing means being provided to:
- generate delay laws, starting from the positions thus determined, such that emitting elements can generate a focused ultrasonic beam (F) with characteristics that are controlled with respect to the object, and
- apply these delay laws to excitation pulses,
the ultrasound receiving elements being designed to supply signals for the formation of images related to the object, **characterized in that** the means of determining the positions of each of the ultrasound emitting elements with respect to the object comprising:
- first means (16, 18, 20, 22, 24; 24, 38, 40, 42, 44, 46, 48, 50, 52, 54) designed to determine the positions of each of the emitting elements with respect to a non-deformable part (14) of the transducer by measuring the deformation of the emitting surface, and to provide signals representative of the positions thus determined,
- second means (58, 60) designed to determine the position and orientation of this non-deformable part of the transducer with respect to the object and to supply representative signals of the position and orientation thus determined, and
- third means (60) designed to supply the positions of each of the ultrasound emitting elements with respect to the object making use of the signals output by these first and second means.

2. Transducer according to claim 1, in which the multiple elements are formed from a flexible piezoelectric polymer strip and a network of adjacent electrodes obtained by metallic deposition.

3. Transducer according to claim 1, in which the multiple elements are rigid piezoelectric elements embedded in a flexible substrate that is passive with respect to ultrasounds.

4. Transducer according to claim 1, in which the multiple elements are rigid and assembled to each other mechanically in order to form an articulated structure.

5. Transducer according to claim 1, in which the first means comprise:
- means (16, 18, 20, 22; 38, 40, 42, 44, 46, 48, 50, 52, 54) of measuring the distance from separate and fixed points of the non-deformable part of the transducer, from the backing of each element of a subassembly of ultrasound emitting elements, and
- auxiliary processing means (24) designed to determine the position of each ultrasound emitting element, making use of the distances determined above.

6. Transducer according to claim 5, in which the distance measurement means comprise:
- auxiliary ultrasound emitters (16) fixed to the backings of the elements of the subassembly and designed to emit ultrasounds in sequence,
- auxiliary ultrasound receivers (18) fixed to the non-deformable part and designed to detect ultrasounds emitted by the auxiliary emitters, and
- means (22) of measuring the distance of each auxiliary emitter from each receiver in a group of auxiliary receivers receiving higher intensity ultrasounds.

7. Transducer according to claim 5, in which the distance measurement means comprise:
- a microwave source (48),
- a plurality of microwave antennas (42, 44) rigidly fixed to the non-deformable part, coupled to this source and designed to emit microwaves in sequence, and also to receive microwaves in sequence,
- microwave probes (38) respectively fixed to the different backings of elements of the sub-assembly and designed to scatter microwaves emitted by the antennas, these probes being respectively fitted with non-linear devices (40) designed to modulate the microwaves respectively scattered by the probes, at different frequencies, and
- microwave reception means (54) coupled to antennas and designed to measure the distance from each probe to each antenna by measuring the phase of the microwaves scattered by this probe and received by this antenna, these reception means also being designed to distinguish probes from each other by a synchronous detection at the different modulation frequencies.

8. Transducer according to any one of claims 5 to 7, in which the auxiliary processing means (24) are designed to determine a profile that best passes through the backings of the elements in the sub-assembly by an interpolation method, and to use this profile to determine the position of the emitting face of each ultrasound emitting element with respect to the non-deformable part of the transducer.

9. Transducer according to any one of claims 1 to 8, in which the second means comprise an articulated mechanical arm (56) fixed to the non-deformable part (14) of the transducer.
